Europäisches Patentamt

European Patent Office

Office européen des brevets

(19)

(11) Numéro de publication: **0 269 523**
**A1**

(12) **DEMANDE DE BREVET EUROPEEN**

(21) Numéro de dépôt: 87402645.3

(22) Date de dépôt: 24.11.87

(51) Int. Cl.⁴: **B 41 B 5/00**
B 41 C 3/00, B 23 H 9/06

(30) Priorité: 27.11.86 FR 8616573

(43) Date de publication de la demande:
01.06.88 Bulletin 88/22

(84) Etats contractants désignés:
AT BE CH DE ES FR GB GR IT LI LU NL SE

(71) Demandeur: **BANQUE DE FRANCE**
**37-39, Quai de Dion Bouton**
**F-92803 Puteaux (FR)**

(72) Inventeur: **Puyplat, Olivier**
**66 rue d'Auteuil**
**F-75016 Paris (FR)**

(74) Mandataire: **Martin, Jean-Jacques et al**
**Cabinet REGIMBEAU 26, Avenue Kléber**
**F-75116 Paris (FR)**

(54) Procédé de fabrication en série d'éléments d'impression typographiques directs en acier, et appareils pour la mise en oeuvre du procédé.

(57) L'invention concerne la fabrication en série d'éléments d'impression typographiques directs en acier.
Le procédé de l'invention consiste à :
- copier un film (2) représentant l'impression désirée sur une plaque de zinc, selon une technique de photogravure,
- réaliser par électro-formage à partir de la plaque de zinc (4) un contre-type en cuivre (6),
- réaliser par électro-érosion à partir du contre-type (6) un sous-type en acier (8) constituant un poinçon de référence,
- réaliser par enfonçage sous presse des plaques en argent grâce au poinçon de référence (8),
- utiliser chaque plaque ainsi enfoncée (11) comme électrode dans un banc d'usinage par électro-érosion, jusqu'à obtention des éléments d'impression en acier (14) désirés.
Application notamment à la réalisation d'éléments de signatures et de roues de numéroteurs pour les billets de banque.

FIG.1

EP 0 269 523 A1

## Description

## PROCEDE DE FABRICATION EN SERIE D'ELEMENTS D'IMPRESSION TYPOGRAPHIQUES DIRECTS EN ACIER, ET APPAREIL POUR LA MISE EN OEUVRE DU PROCEDE.

La présente invention concerne le domaine de l'imprimerie, et plus particulièrement les éléments d'impression typographiques directs en acier.

Dans le cas particulier du papier fiduciaire, et notamment des billets de banque, plusieurs types d'éléments d'impression typographiques directs sont couramment utilisés. Il convient de citer les éléments servant à reproduire des signatures, et les roues de numérotage ordinairement montées selon un ensemble pour constituer un numéroteur.

Traditionnellement, on procède à l'impression des signatures et des millésimes d'émission des billets de banque grâce à des petits éléments typographiques en zinc, ces éléments étant montés sur des formes à numéroter.

Le processus de fabrication se déroule alors comme suit :

1) après recueil des signatures sur une carte à gratter, on réalise un film avec réduction ;

2) on copie ce film représentant l'impression désirée sur une plaque de zinc présensibilisée, d'environ 2,5 mm d'épaisseur, selon une technique de photogravure ;

3) on grave la plaque de zinc à l'acide nitrique, en utilisant en général des additifs classiques dans le domaine de la gravure, le temps de morsure étant de l'ordre de 25 minutes ;

4) on durcit la surface de la plaque gravée par un chromage électrolytique, afin de réduire l'usure à l'impression.

Ces différentes opérations sont effectuées par plaque portant 30 à 40 signatures.

L'inconvénient principal des éléments d'impression en zinc ainsi obtenus réside dans leur usure. Bien que la quantitié de feuilles imprimables à partir d'un élément d'impression en zinc varie avec la nature de l'encre et du graphisme, et donc la pression d'application nécessaire, on peut considérer que cette quantité se situe entre 400 000 et 500 000 feuilles. D'ailleurs, on procède au changement automatique des éléments à partir d'une quantité prédéterminée, afin d'éviter une altération progressive de la qualité d'impression obtenue.

On pourrait être tenté d'utiliser un matériau plus performant, en particulier un acier, mais cela nécessiterait l'utilisation d'une technique de gravure directe par fraisage. Une telle solution est difficilement compatible avec l'extrême finesse des caractères recherchée dans ce domaine d'application, ce qui explique le maintien de la technique traditionnelle avec des éléments d'impression en zinc.

On retrouve les mêmes inconvénients pour les roues ou molettes de numérotage utilisées dans les numéroteurs de billets de banque.

En effet, si l'on souhaite disposer de chiffres à graphisme spécial pour le numérotage, il est nécessaire de procéder à une fabrication spécifique des roues de numérotage.

Dans ce cas, on procède à une fabrication manuelle d'ensembles poinçon-matrice effectuée par des graveurs hautement qualifiés. Les matrices ainsi fabriquées sont assemblées pour former un moule en forme de décagone. On procède alors à un moulage par injection en utilisant un métal blanc.

Les efforts de développement ont essentiellement porté sur le choix du métal utilisé. Ainsi, on a d'abord utilisé un zamac avec 4 % d'aluminium et 3 % de magnésium, mais les pièces obtenues étaient fragiles, les chiffres étant cassants, et la qualité du graphisme obtenu restait médiocre. On s'est alors tourné vers des bronzes blancs, en particulier un alliage comportant 78 % de zinc, 5 % de cuivre et 17 % d'antimoine.

Les numéroteurs ainsi confectionnés ont alors permis l'impression de 450 000 à 500 000 feuilles sans altération sensible de la qualité du graphisme obtenu, la qualité de l'impression étant naturellement fonction de l'usure des numéroteurs. Il était alors nécessaire de changer les molettes servant le plus, en particulier la molette des unités. De plus, les molettes tendent à se gripper quand elles ne tournent pas, de sorte que leur remplacement périodique est également nécessaire.

Outre l'inconvénient de l'usure dans le temps, il convient de mentionner également celui qui est inhérerent à l'emploi d'une technique de moulage. En effet, la fabrication du moule requiert l'emploi d'un poinçon de base en acier : si celui-ci vient à se détériorer, le moule en est automatiquement affecté, ainsi que les éléments d'impression obtenus.

Comme précédemment, une gravure directe par fraisage serait incompatible avec l'extrême finesse du graphisme des chiffres, car on obtiendrait des chiffres imprimés trop gras.

Ainsi, le techniques connues servant à fabriquer les éléments typographiques directs mettent en oeuvre des métaux mous qui s'usent assez rapidement, ou exigent des processus d'usinage difficiles et peu performants pour la qualité d'impression obtenue si l'on cherche à utiliser des métaux plus durs comme l'acier.

La présente invention a pour objet de proposer un procédé de fabrication en série d'éléments d'impression typographiques directs en acier, en utilisant une technique d'usinage par étincelage ou électro-érosion, à partir d'une réplique conductrice de l'élément d'impression faisant fonction d'électrode.

L'usinage par életro-érosion est en effet une technique de reproduction utilisée couramment dans le domaine de l'automobile, de l'aviation et du nucléaire, car elle permet d'usiner, avec de très grandes précisions, des métaux réfractaires à tout usinage classique (comme par exemple, du carbure de tungstène). Ce type particulier d'usinage, n'utilisant aucun outil coupant, se fait sans contact : l'arrachage du métal est réalisé par une succession d'étincelles qui s'établissent entre la pièce à usiner et la réplique de la forme à obtenir, réplique conductrice appelée électrode pour la circonstance. L'usinage se passe dans des machines dont les cycles opératoires sont très automatisés, et qui sont généralement programmables.

Un ensemble typique d'usinage par électro-érosion comporte un générateur de décharges intermittentes (les décharges électriques étant contrôlées en durée et en courant) et un bâti support d'une électrode (en général en graphite, en laiton ou en cuivre) et d'une pièce à usiner en acier trempé. La pièce à usiner est alors fixée dans un bac contenant un liquide diélectrique (en général du kérosène) et ayant pour fonction d'assurer le passage du courant et l'extraction du métal érodé nettoyant ainsi l'intervalle entre électrode et pièce à usiner. Pour que le travail soit automatique, la descente de l'électrode dans la pièce doit être servo-commandée, de telle sorte que la distance entre électrode et pièce à usiner soit maintenue à la valeur de l'épaisseur de diélectrique qui peut être rompue par les décharges ; à cet effet, la descente de l'électrode est asservie à la différence de potentiel entre l'électrode et la pièce à usiner.

Il est bien connu dans cette technique que le débit de matière enlevée dépend de nombreux facteurs, le premier étant le régime d'étincelage fourni par le générateur ; l'obtention d'un débit le plus élevé possible en utilisant des étincelles puissantes à grandes fréquences de récurrence est cependant limitée par l'état de surface recherché et la précision d'usinage.

Dans la pratique, pour obtenir à la fois un état de surface très fin et une précision d'usinage importante, avec des délais d'usinage réduits, on est conduit à utiliser plusieurs régimes d'étincelage : ébauche, semi finition, finition, super finition.

Pièce et électrode subissent toutes deux l'érosion due à l'étincelage. Mais la différence de matière érodée sur la pièce et l'électrode dépend de la nature de chacune d'elle et aussi du choix des conditions électriques pour la création des étincelles. En choisissant les matériaux d'électrode appropriés et en influençant la décharge par variation de sa durée, de son intensité et de la polarité, on peut arriver à une dissymétrie très importante : par exemple obtenir 99 % d'érosion sur la pièce et 0,5 % sur l'électrode. Cependant, dans les régimes de finition et super finition, il est difficile de ne pas avoir une usure sensible de l'électrode (de l'ordre de 10 %) . Cette usure de l'électrode contraint, dans les opérations où on recherche une excellente qualité d'usinage, à procéder au remplacement des électrodes au fur et à mesure qu'on avance dans l'érosion vers le stade de super finition. Pour graver de l'acier, les électrodes sont en général en graphite (surtout si l'on cherche de forts débits d'érosion) mais aussi très souvent en cuivre ou en laiton.

Le brevet français No 1 196 818 décrit par exemple un banc d'usinage par électro-érosion, utilisé pour le finissage des flancs des dents droites et hélicoïdales de roues dentées. Une autre application est illustrée dans le brevet américain No 3 205 335, où l'électro-érosion est utilisée pour la fabrication de fraises. D'autres techniques mettant en oeuvre un usinage par électro-érosion sont décrites dans le brevet britannique No 2 101 157 et le brevet français No 2 023 403.

Les performances d'usinage obtenues par électro-érosion sont très bonnes. La précision est facilement descendue au niveau du micron. Quant à l'état de surface il dépend bien sûr beaucoup du régime d'étincelage : la rugosité absolue en microns est de l'ordre de 10 à 20 pour l'ébauche, 3 à 5 pour la finition, 0,5 en super finition et 0,1 micron en polissage.

Si l'on cherche à réaliser des éléments d'impression typographiques directs, il convient de choisir un degré de précision adapté pour leur définition, car une très grande précision est coûteuse du fait de la longueur du temps d'usinage. En général, un compromis aboutira à se limiter à des passes d'ébauche, de finition et parfois de super finition.

Il a été proposé de réaliser des tambours numéroteurs pour calculatrices, par compression d'une poudre métallique (frittage), comme décrit par exemple dans le brevet américain No 3 922 127. Cependant, une telle technique ne conviendrait pas pour des éléments d'impression typographiques directs, surtout s'il s'agit de roues de numérotage pour l'impression de papier fiduciaire.

L'invention a pour objet de rendre possible une fabrication en série d'éléments d'impression typographiques directs, cette fabrication pouvant être automatisée, non seulement pour une uniformisation de la qualité des éléments réalisés, mais pour s'affranchir le plus possible du délai de leur obtention.

Il s'agit plus particulièrement d'un procédé remarquable en ce qu'il comporte les étapes successives suivantes :

a) on copie un film représentant l'impression désirée sur une plaque présensiblée, de préférence en zinc, selon une technique de photogravure,

b) à partir de la plaque de zinc, on réalise par électro-formage un contre-type en cuivre,

c) à partir du contre-type en cuivre, on réalise par électro-érosion un sous-type en acier constituant un poinçon de référence,

d) on applique des plaques métalliques, une par une, sur ce poinçon de référence par enfonçage sous presse,

e) on utilise chaque plaque ainsi enfoncée comme électrode dans un banc d'usinage par électro-érosion, jusqu'à obtention d'autant d'éléments d'impression en acier présentant l'état de surface recherché.

De préférence, les plaques enfoncées servant d'électrode pour l'usinage par électro-érosion sont en argent.

Lorsque l'élément d'impression typographique direct est un ensemble de roues de numérotage, il est avantageux que le film utilisé pour l'étape a) représente une succession de rangées parallèles dont chaque rangée comporte un même chiffre répété autant de fois que l'on a des roues pour constituer l'ensemble désiré, de sorte qu'une portion périphérique prédéterminée soit usinée simultanément pour chacune des roues en acier lors de l'étape c) jusqu'à obtention de l'état de surface recherché pour le chiffre concerné, et ainsi de suite jusqu'à ce que les roues soient usinées pour présenter tous les chiffres désirés.

De préférence, avant l'étape d'usinage par électro-érosion, on procède à une fabrication de flancs décagonaux par découpage, puis à un montage de ces flancs sur un support commun avec une indexation angulaire de chacun desdits flancs.

Selon une caractéristique avantageuse, l'étape d'électro-érosion est réalisée successivement pour chaque chiffre avec un déplacement relatif entre le support commun des flancs et l'électrode, parallèlement au plan de ladite électrode, et une rotation de 36° dudit support commun autour de son axe ; en particulier, l'électrode est déplacée parallèlement à son plan lors de l'étape d'électro-érosion, le support commun étant monté mobile dans une direction parallèle audit plan et perpendiculaire à la direction du déplacement de ladite électrode.

Il est naturellement possible d'utiliser plusieurs électrodes successivement pour fabriquer une série d'ensembles de roues de numérotage.

De préférence, l'étape d'électro-érosion est suivie d'une étape de montage des roues usinées d'un même ensemble sur un support définitif pour constituer un numéroteur.

L'invention concerne également un appareil pour la mise en oeuvre du procédé qui vient d'être défini pour fabriquer des roues de numérotage.

L'appareil de l'invention comporte un banc d'usinage par électro-érosion automatisé, avec un bâti portant une ou plusieurs électrodes, une broche portant un ensemble de roues à usiner, ladite broche étant mobile autour de l'axe commun des roues, et des moyens pour réaliser un déplacement relatif entre la ou les électrodes et ledit ensemble de roues selon trois axes de référence dont l'un est parallèle audit axe commun.

De préférence, le bâti est mobile dans un plan horizontal selon deux axes de référence, et la broche est mobile selon une direction vertical définissant le troisième axe de référence ; en particulier, le bâti est monté fixe dans un bac contenant un liquide diélectrique, ledit bac étant mobile dans un plan horizontal.

L'appareil peut en outre comporter au moins un ratelier rotatif pour recevoir les supports avec leur ensemble de roues, avant et après usinage par électro-érosion, et un organe de transfert pour le montage ou le démontage automatique de chaque support sur la broche.

D'autres caractéristiques et avantages de l'invention apparaîtront plus clairement à la lumière de la description qui va suivre et des dessins annexés, concernant un mode particulier de réalisation, en référence aux figures où :

- la figure 1 illustre schématiquement les différentes étapes d'un procédé de fabrication conforme à l'invention, l'élément d'impression typographique direct à réaliser étant représenté par la lettre "B", étant entendu qu'il pourra s'agir d'inscriptions quelconques, et en particulier de signature telles que celles utilisées pour les billets de banque ;

- les figures 2a à 2d illustrent les premières étapes du procédé de l'invention, en vue de réaliser des roues de numérotage, depuis le film représentant l'impression désirée (seul le premier chiffre de chaque rangée est représenté ici), jusqu'au poinçon de référence en acier ;

- la figure 3 illustre en perspective une plaque obtenue par enfonçage sous presse (non représentée) à partir du poinçon de référence représenté à la figure 2d ;

- la figure 4 est une vue en perspective illustrent le montage sur un bâti de quatre plaques enfoncées (deux seulement sont visibles) du type de celle illustrée à la figure 3 ;

- la figure 5 illustre un support commun pour un ensemble de roues ou molettes de numérotage, ces roues étant déjà usinées par électro-érosion ;

- la figure 6 est une vue en plan du numéroteur comportant l'ensemble usiné de la figure 5 ;

- la figure 7 est une vue en perspective illustrant un appareil pour la mise en oeuvre du procédé, et en particulier le banc d'usinage par électro-érosion utilisé.

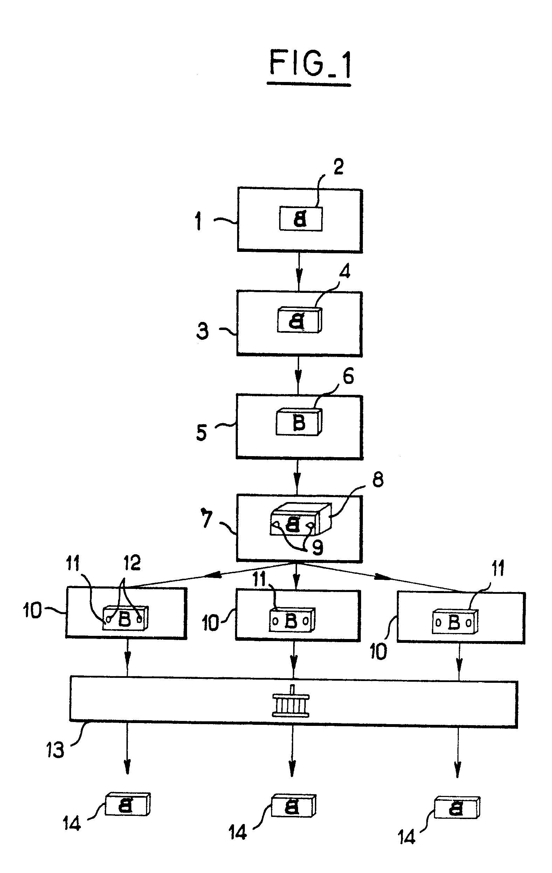

La figure 1 illustre schématiquement les différentes étapes d'un procédé de fabrication en série d'éléments d'impression typographiques directs conforme à l'invention. Ces étapes sont représentées par des blocs à l'intérieur desquels est illustré schématiquement le produit concerné. La lettre majuscule B,choisie arbitrairement pour symboliser le graphisme recherché, permet de mieux différencier les faces positives ou négatives obtenues, étant entendu qu'il pourra s'agir d'inscriptions quelconques, et en particulier d'indications complexes en lettres accompagnées de signatures.

Le bloc 1 schématise la réalisation d'un film 2 porteur de l'impression à réaliser, en général avec au moins une réduction. Le bloc 3 indique que l'on copie le film 2 sur une plaque présensibilisée, en général en zinc, selon une technique classique de photogravure.

Le bloc 5 indique que l'on réalise par électroformage à partir de la plaque de zinc 4 un contre-type en cuivre 6. Plus précisément, on procède à une gravure de la plaque de zinc à l'acide nitrique, mais en recherchant un talus aussi vertical que possible : pour ce faire, la conduite de la gravure est effectuée avec une vitesse de palette plus rapide, une température de solution plus basse et une concentration en acide plus faible, comparativement à la gravure d'une plaque de zinc utilisée dans le cadre des techniques connues pour réaliser des éléments d'impression typographiques en zinc. On procède ensuite à un dégraissage approfondi de la plaque de zinc ainsi mordue, puis à un dépôt par électro-déposition de cuivre alcalin puis de nickel (pour faciliter les opérations ultérieures de démoulage), puis à un dépôt d'une couche d'éléments séparateurs conformément aux techniques classiques du domaine de la galvanoplastie. On réalise enfin un dépôt galvanique d'une couche de cuivre au pyrophosphate, puis un épaississement avec électro-déposition de cuivre acide, ce qui permet d'obtenir, après séparation de la plaque de zinc, un contre-type en cuivre tel que celui référencé 6.

Le bloc 7 indique que l'on réalise par électro-érosion, à partir du contre-type en cuivre 6, un sous-type en acier 8 constituant un poinçon de référence. Au cours de cette étape d'électro-érosion, le contre-type en cuivre 6 sert donc d'électrode ou élément générateur. Le poinçon de référence 8 présente ici deux picots de centrage coniques 9.

On pourrait naturellement utiliser ce poinçon de référence comme élément d'impression typographique, mais il est beaucoup plus intéressant, conformément à un aspect essentiel de l'invention, d'utiliser ce poinçon de référence pour réaliser plusieurs plaques par enfonçage sous-presse, ces plaques pouvant servir à leur tour d'électrode pour les opérations futures de duplication du sous-type. Les blocs 10 (ici trois blocs) indiquent que l'on a réalisé par enfonçage à partir du poinçon de référence de telles plaques 11, de préférence en argent. En fait, le passage par l'électrode en argent n'est justifié que par la volonté de réduire le délai d'obtention des électrodes supplémentaires, d'où la nécessité de trouver le moyen de dupliquer les contre-types rapidement et en obtenant un résultat de bonne qualité. L'enfonçage est effectué sur une presse hydraulique (non représentée ici), avec une pression utile de l'ordre de 250 tonnes. Une telle pression donne d'excellents résultats pour un poinçon d'argent de 0,25 dm$^2$, pour une profondeur enfoncée d'environ 1,5 mm. On pourrait naturellement utiliser un autre métal que l'argent, en particulier du cuivre. Cependant, du fait de l'écrouissage du cuivre, il serait alors nécessaire de procéder à des opérations de recuit intermédiaires pour assurer la fidélité parfaite de l'électrode au poinçon. De ce fait, le choix de l'argent sera préféré, car il s'agit d'un métal excellent conducteur et facile à mettre en oeuvre par sa faible résistance à la pression et sa faible aptitude à l'écrouissage. Lors de l'enfonçage sous presse, on utilisera de préférence une frette en acier, pour limiter le fluage de la matière. On procède enfin à un dressage du plan arrière et des faces de chacune des plaques enfoncées obtenues, de façon que celles-ci soient aptes à être montées sur une machine d'usinage par électro-érosion. Bien que la presse hydraulique utilisée ne soit par représentée, on comprendra aisément que le sous-type en acier devra être fixé à la tête d'un poinçon qui est utilisé pour enfoncer la plaque en argent dans une presse. On pourra ainsi enfoncer autant de plaques d'argent qu'il est nécessaire de fabriquer de sous-types d'impression en acier. On notera la présence sur les plaques 11 d'évidements coniques 12 résultant de l'enfonçage au niveau des cônes de centrage 9 du poinçon de référence.

Chacune des plaques en argent ainsi obtenues est alors utilisée comme électrode dans un banc d'usinage par électro-érosion schématisé par le bloc 13, jusqu'à obtention d'autant d'éléments d'impression en acier 14 présentant l'état de surface recherché.

La succession de ces différentes opérations qui mettent en oeuvre à la fois des techniques de photogravure, de galvanoplastie, et d'électro-érosion, est relativement longue. L'opération d'électro-érosion en elle-même nécessite un temps de l'ordre de 24 heures pour des passes d'ébauche et de finition. Il convient de noter que l'opération d'électro-érosion est effectuée avec une seule électrode. En effet, la partie principale à usiner qui entraîne aussi une usure relative de l'électrode se trouve être le fond du cliché, avec de ce fait une faible importance pour la qualité de l'impression. Au moment où l'on arrive à usiner le haut des éléments constituant le graphisme à reproduire, ce sont les fonds des gorges de l'électrode qui entrent en action, lesdits fonds n'ayant pas encore subi d'usure depuis le début de l'érosion. Le degré de finition des surfaces d'impression est donc de grande qualité, bien que l'électrode qui a servi à l'érosion n'ait pas été changée pour les phases de finition.

La demanderesse a pu constater que l'utilisation des éléments d'impression en acier ainsi réalisés ne pose aucun problème sur les machines à imprimer, l'encre utilisée pouvant être la même avec des clichés en acier que pour des clichés en zinc réalisés selon les techniques connues. La très grande régularité de fabrication des clichés en acier conduit naturellement à une régularité d'impression du graphisme beaucoup plus satisfaisante. Par ailleurs, en ce qui concerne l'usure, il a été observé qu'un groupe de huit signatures ayant imprimé près de neuf millions de feuilles ne présentait aucune usure apparente. On peut très raisonnablement estimer atteindre plusieurs dizaines de millions d'impression avec de tels éléments d'impression typographiques en acier, ce qui représente un progrès considérable par rapport aux éléments classiques réalisés en zinc.

L'invention trouve une application particulièrement intéressante lorsqu'il s'agit de réaliser des ensembles de roues ou molettes de numérotage.

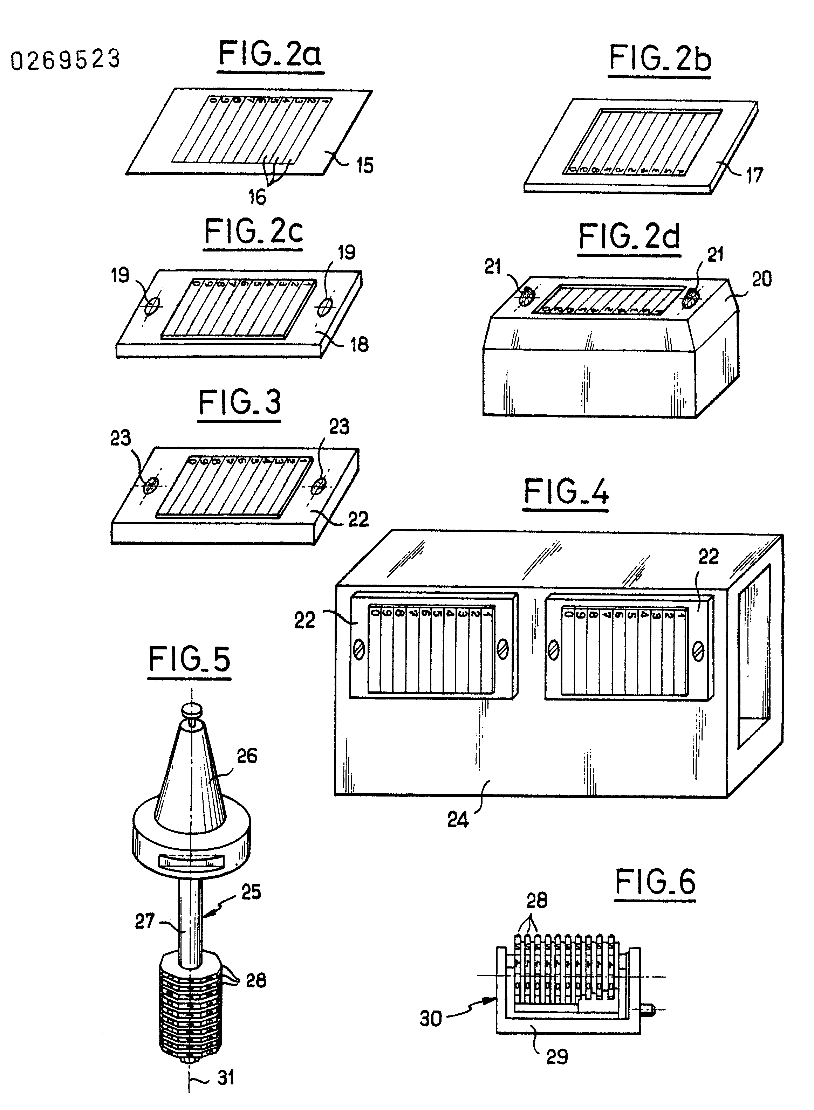

Pour cela, on réalise un film 15 représentant l'impression successive des dix chiffres d'un numéroteur (succession de rangées parallèles 16), ainsi qu'illustré à la figure 2a. Sur chacune de ces rangées, le chiffre est répété autant de fois que l'on souhaite utiliser de roues ou molettes juxtaposées. En l'espèce, le numéroteur utilise dix roues juxtaposées, mais, pour ne pas charger inutilement les figures, on n'a représenté qu'un chiffre pour chacune des rangées.

Les opérations suivantes sont naturellement analogues à celles déjà décrites précédemment. La figure 2b illustre une plaque de zinc 17 sur laquelle a été copié le film 15, selon une technique classique de photogravure. Après morsure du zinc à l'acide nitrique, on réalise par électro-formage un contre-type en cuivre 18, sur lequel on pratique des orifices de centrage 19. La figure 2d illustre le sous-type en acier réalisé par électro-érosion à partir du contre-type en cuivre 18, ce sous-type constituant un poinçon de référence avec des cônes de centrage 21.

Ce sous-type en acier est ensuite utilisé pour la réalisation d'un grand nombre d'électrodes en argent par enfonçage sous presse, une telle électrode 22 étant illustrée en figure 3 sur laquelle on distingue également des évidements coniques correspondants 23.

Ces plaques enfoncés en argent sont ensuite montées dans un banc d'usinage par électro-érosion pour la réalisation des roues de numérotage. La figure 4 indique ainsi un ensemble de telles plaques 22 montées sur un bâti commun 24 présentant un évidement central. Un tel bâti peut ainsi supporter un ensemble de quatre plaques , mais il va de soi que l'on pourrait utiliser une seule plaque.

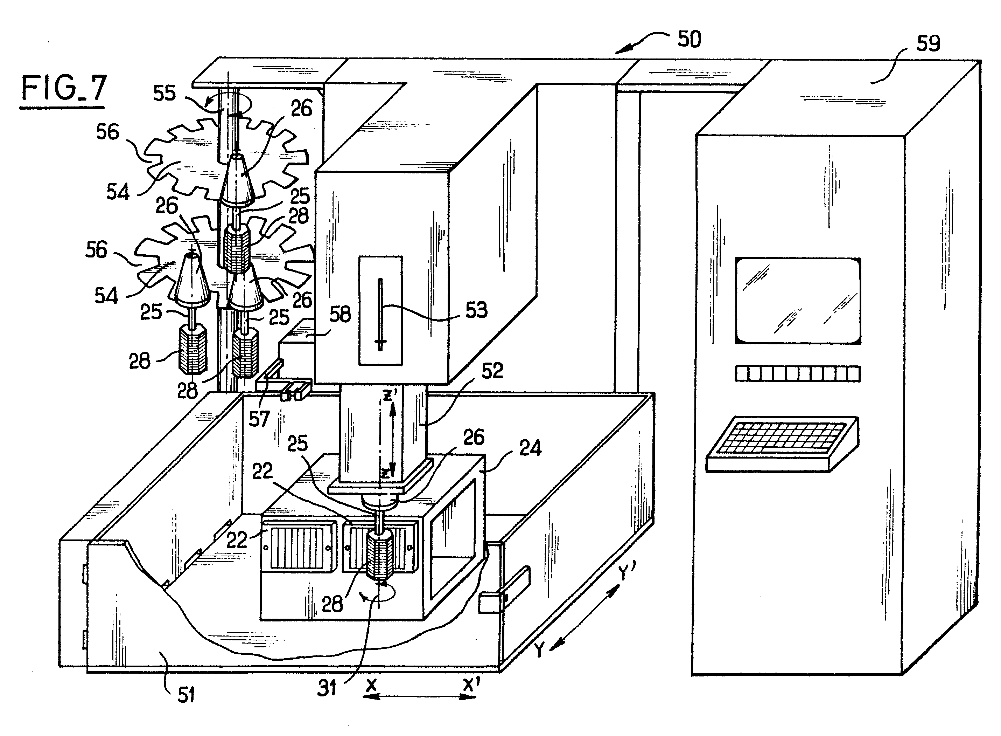

Parallèlement à ces opérations, on procède à la fabrication de flancs décagonaux par découpage, puis assemblage de ces flancs sur un axe de façon à maintenir entre eux la distance préétablie entre les roues du film de base. On distingue ainsi sur la figure 5 un support commun 25 présentant une partie 26 permettant son montage sur une broche de la machine (celle-ce sera décrite plus en détail en référence à la figure 7), et une tige 27 sur laquelle sont montés avec indexage dix flancs décagonaux 28. Chaque côté de l'ensemble des flancs est d'abord lisse, puis progressivement usiné par électro-érosion jusqu'à obtention du chiffre désiré pour ce côté. Il suffit ensuite de modifier la position relative entre l'ensemble de flancs décagonaux et l'électrode concernée pour amener un nouveau côté dudit ensemble en face de la rangée correspondante de ladite électrode. Lorsque tous les côtés de l'ensemble de flancs décagonaux ont ainsi été usinés, on obtient un ensemble de roues de numérotage correspondant à celui illustré sur la figure 5. Une fois l'étape d'électro-érosion terminée, on procède à un montage des roues usinées 28 sur un support définitif 29 pour constituer un numéroteur 30, ainsi qu'illustré à la figure 6. Le numéroteur 30 présente une structure identique à celle des numéroteurs classiques ; il ne s'en différencie que par le fait au demeurant essentiel, que chacune des roues de numérotage qu'il comporte est en acier usiné par électro-érosion, permettant ainsi d'obtenir un graphisme avec toutes les finesses requises.

La figure 7 va permettre de mieux comprendre comment se déroule cette étape fondamentale d'électro-érosion. La machine 50 illustrée comporte un bac 51 contenant un liquide diélectrique, dans lequel est plongé le bâti 24 portant les électrodes en argent 22. Une broche 52 permet le montage de la partie 26 du support d'ensemble de flancs décagonaux à usiner 25. Cette broche 52 est montée sur le bâti de la machine avec possibilité d'un déplacement selon un axe vertical z-z', déplacement qui peut être visuellement contrôlé par un témoin en face avant 53: la position verticale de l'ensemble de flancs à usiner peut ainsi être exactement contrôlée pour que ledit ensemble de flancs soit positionné exactement en face de l'électrode en argent 22 concernée. La broche 52 comporte également des moyens permettant de faire tourner l'ensemble support 25 autour de son axe 31, selon un angle de 36° puisqu'il s'agit d'usiner dix côtés pour chacun des flancs décagonaux.

Il est naturellement nécessaire de prévoir également la possibilité de réaliser un déplacement relatif entre les électrodes et les flancs à usiner dans un plan horizontal, selon deux axes de référence x-x', y-y'. On pourrait pour cela monter la broche 52 sur un chariot mobile selon les deux axes, mais ceci aurait pour objet de compliquer quelque peu la structure. Il est préférable,comme illustré ici, de prévoir que le bâti 24 est monté fixe dans le bac 51, ledit bac étant alors monté sur une table à mouvements croisés (non représentée ici), autorisant des déplacements selon les deux axes de référence d'un plan horizontal. Ainsi, la distance entre les côtés à usiner de l'ensemble de flancs décagonaux et la face en regard de l'électrode, est parfaitement contrôlée (axe y-y'). Dès qu'un côté de cet ensemble a été usiné, il suffit de procéder d'une part à une rotation de 36° de l'ensemble de flancs décagonaux, et d'autre part à un déplacement de l'ensemble bac, bâti, électrode selon un pas correspondant à une rangée de ladite électrode (axe x-x').

On distingue également deux rateliers rotatifs 54 montés sur un arbre commun 55 : ces rateliers permettent de stocker les supports 25 avec leur ensemble de roues de numérotage 28 par simple insertion dans l'une des encoches 56 prévues à la périphérie desdits rateliers. Le transfert du poste de stockage au poste d'usinage par électro-érosion est assuré par un bras chargeur 55 dont le support est mobile selon les trois axes de référence x-x', y-y', z-z'. L'ensemble est commandé par une unité centrale 59 à commande programmable. Cette unité de commande permet de contrôler les différents paramètres de fonctionnement, et de gérer automatiquement la fabrication en série de plusieurs ensembles de roues de numérotage.

L'opération d'électro-érosion nécessite environ huit heures par jeu complet de roues d'un numéroteur. La présence de quatre électrodes en argent, pouvant chacune usiner trois ensembles de numérotage, permet d'obtenir ainsi en une séquence complète d'opérations la fabrication de vingt-quatre ensembles qui sont stockés sur les rateliers.

Les numéroteurs ainsi réalisés, avec des molettes en acier, sont extrêmement performants. Un premier test a permis de constater qu'après une impression de cinq millions de feuilles, les molettes ne présentaient aucune usure. Il faut cependant noter que la présence de roues de numéroteurs en acier peut entraîner une légère modification dans la structure des numéroteurs : en effet, il semble préférable de modifier les rochets des numéroteurs classiques, de façon à avoir des pièces d'alignement plus douces limitant l'usure desdits rochets. L'usure des rochets reste un paramètre limitant la capacité réelle des numéroteurs, mais on peut cependant d'ores et déjà estimer que le taux d'utilisation avec des numéroteurs acier est au moins dix fois supérieur à celui des précédents numéroteurs moulés en bronze.

Il va de soi que l'invention n'est pas limitée aux modes de réalisation qui viennent d'être décrits, mais englobe au contraire toute variante reprenant, avec des moyens équivalents, les caractéristiques essentielles figurant aux revendications.

En particulier, le domaine d'application n'est nullement limité aux éléments d'impression typographiques directs qui ont été spécifiquement mentionnés dans la description, le procédé de l'invention pouvant notamment être envisagé pour la fabrication

d'éléments taille-douce.

## Revendications

1. Procédé de fabrication en série d'éléments d'impression typographiques directs en acier, caractérisé par le fait qu'il comporte les étapes successives suivantes :

a) on copie un film (2, 15) réprésentant l'impression désirée sur une plaque présensibilisée, de préférence en zinc, selon une technique de photogravure,

b) à partir de la plaque de zinc (4, 17), on réalise par électro-formage un contre-type en cuivre (6, 18),

c) à partir du contre-type en cuivre (6, 18), on réalise par électro-érosion un sous-type en acier (8, 20) constituant un poinçon de référence,

d) on applique des plaques métalliques, une par une, sur ce poinçon de référence (8, 20) par enfonçage sous presse,

e) on utilise chaque plaque ainsi enfoncé (11, 22) comme électrode dans un banc d'usinage par électro-érosion, jusqu'à obtention d'autant d'éléments d'impression en acier (14, 28) présentant l'état de surface recherché.

2. Procédé selon la revendication 1, caractérisé par le fait que les plaques enfoncées (11, 22) servant d'électrode pour l'usinage par électro-érosion sont en argent.

3. Procédé selon les revendications 1 et 2, dans lequel l'élément d'impression typographique direct est un ensemble de roues de numérotage, caractérisé par le fait que le film (15) utilisé pour l'étape a) représente une succession de rangées parallèles (16), dont chaque rangée comporte un même chiffre répété autant de fois que l'on a de roues (28) pour constituer l'ensemble désiré, de sorte qu'une portion périphérique prédéterminée soit usinée simultanément pour chacune des roues en acier lors de l'étape

c) jusqu'à obtention de l'état de surface recherché pour le chiffre concerné, et ainsi de suite jusqu'à ce que les roues soient usinées pour présenter tous les chiffres désirés.

4. Procédé selon la revendication 3, caractérisé par le fait qu'avant l'étape d'usinage par électro-érosion, on procède à une fabrication de flancs décagonaux par découpage, puis à un montage de ces flancs sur un support commun (25) avec une indexation angulaire de chacun desdits flancs.

5. Procédé selon la revendication 4, caractérisé par le fait que l'étape d'électro-érosion est réalisée successivement pour chaque chiffre avec un déplacement relatif entre le support commun (25) des flancs et l'électrode (22), parallèlement au plan de ladite électrode, et une rotation de 36° dudit support commun autour de son axe (31).

6. Procédé selon la revendication 5, caractérisé par le fait que l'électrode (22) est déplacée parallèlement à son plan lors de l'étape d'électro-érosion, le support commun (25) étant monté mobile dans une direction parallèle audit plan et perpendiculaire à la direction du déplacement de ladite électrode.

7. Procédé selon la revendication 6, caractérisé par le fait qu'on utilise plusieurs électrodes (22) successivement pour fabriquer une série d'ensembles de roues de numérotage (28).

8. Procédé selon l'une des revendications 3 à 7, caractérisé par le fait que l'étape d'électro-érosion est suivie d'une étape de montage des roues usinées (28) d'un même ensemble sur un support définitif (29) pour constituer un numéroteur (30).

9. Appareil pour la mise en oeuvre du procédé selon l'une des revendications 3 à 8, caractérisé par le fait qu'il comporte un banc d'usinage par électro-érosion automatisé (50), avec un bâti (24) portant une ou plusieurs électrodes (22), une broche (52) portant un ensemble à usiner de roues de numérotage pour impression typographique, ladite broche étant mobile autour d'un axe vertical (31) commun auxdites roues de numérotage, et des moyens pour réaliser un déplacement relatif entre la ou les électrodes (22) et ledit ensemble de roues selon trois axes de référence dont l'un est parallèle audit axe commun.

10. Appareil selon la revendication 9, caractérisé par le fait que le bâti (22) est mobile dans un plan horizontal selon deux axes de référence, et la broche (52) est mobile selon une direction verticale définissant le troisième axe de référence.

11. Appareil selon la revendication 10, caractérisé par le fait que le bâti (22) est monté fixe dans un bac (51) contenant un liquide diélectrique, ledit bac étant mobile dans un plan horizantal.

12. Appareil selon l'une des revendications 9 à 11, caractérisé par le fait qu'il comporte en outre au moins un ratelier rotatif (54) pour recevoir des supports (25) associés aux ensembles de roues de numérotage, avant et après usinage par électro-érosion, et un organe de transfert (57) pour le montage ou le démontage automatique de chaque support (25) associé à un ensemble de roues sur la broche (52).

0269523

FIG_1

0269523

FIG.2a

FIG.2b

FIG.2c

FIG.2d

FIG.3

FIG.4

FIG.5

FIG.6

FIG_7

# DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-1 196 818  (OTNIMA MASCHINENFABRIK GmbH) <br> * Figure 1; page 3, colonne 1, lignes 9-38; page 3, colonne 2, lignes 6-15 * | 9-11 | B 41 B    5/00 <br> B 41 C    3/00 <br> B 23 H    9/06 |
| Y | --- | 12 | |
| Y | EP-A-0 132 599  (EROWA AG) <br> * Figure 1; revendication 1 * <br> --- | 12 | |
| A | US-A-3 205 335  (G.E. JOHNSTON et al.) <br> * Figures 1,4; colonne 2, ligne 62 - colonne 3, ligne 8; colonne 1, lignes 15-71 * <br> --- | 9-11 | |
| A | GB-A-2 101 157  (STAVELEY IND. LTD) <br> * Page 1, lignes 15-29,115-120; page 2, lignes 96-108; figures 1,4 * <br> --- | 1,9 | |
| A | FR-A-2 023 403  (H. HERTEL) <br> * Revendication 1; page 2, lignes 22-35, figure 1 * <br> --- | 1 | DOMAINES TECHNIQUES RECHERCHES (Int. Cl.4) |
| A | US-A-3 922 127  (P. SCHWARZKOPF) <br> * Revendication 1; figure 1 * <br> --- | 1 | B 41 B <br> B 41 C <br> B 23 H <br> B 41 D <br> B 41 J |
| A | CUTTING TOOL ENGINEERING, vol. 28, no. 11/12, novembre/décembre 1976, pages 4-5; A. SAVITZKY: "Machining the 'Unmachinable' by EDM" <br> * Page 4, figure 1 * <br> --- | 1 | |
| A | MODERN MACHINE SHOP, février 1980, pages 88-94; H.M. SWAN: "Shaping type at IBM" <br> ----- | 1 | |

Le présent rapport a été établi pour toutes les revendications

| Lieu de la recherche | Date d'achèvement de la recherche | Examinateur |
|---|---|---|
| LA HAYE | 15-02-1988 | WEBER P.L.P. |

EPO FORM 1503 03.82 (P0402)